# EUROPEAN PATENT APPLICATION

(11) **EP 2 708 977 A1**
(43) Date of publication of application: **19.03.2014**
(21) Application number: 12184290.0
(22) Date of filing: 13.09.2012
(51) Int. Cl.: G06F 1/32, G06F 3/0354, G06F 3/0483

(54) **User input device such as an electronic menu**

(71) Applicant: Almos Technologies Pty. Ltd., Fremantle, WA 6160 (AU)
(72) Inventor: Rakoczy, Steve, Perth, Western Australia 6019 (AU); McGuinness, Steven Thomas, Perth, Western Australia 6166 (AU)
(74) Representative: Vernout, Robert

(57) **Abstract**

User input device, such as an electronic menu, comprising a back cover, a stack of pages, each page having selectable printed items thereon, each page being removable from said stack, for instance by being hingedly attached to said back cover at one side such that a user can select each one of said pages to be on top, said device comprising an electrically powered page detection mechanism arranged to determine which one of said pages is on top, said back cover comprising an electrically powered touch detection mechanism arranged to determine the presence and location of a tip of a user's finger or stylus on or near the surface of the page on top, wherein said user input device comprises a power management device electronically coupled to said detection mechanisms and arranged to keep said page detection mechanism in a sleep modus wherein no or relatively little power is used until said touch detection mechanism determines the presence of the tip of a user's finger or stylus, and to power up said page detection mechanism temporarily for a period of time if said touch detection mechanism determines the presence of the tip of a user's finger or stylus, said period of time being long enough to enable said page detection mechanism to determine which one of said pages is on top, and to put said page detection mechanism in said sleep modus once said determination has been completed.

## Description

The invention relates to a user input device, such as an electronic menu, comprising a back cover, a stack of pages, each page having selectable printed items thereon, each page being removable from said stack, for instance by being hingedly attached to said back cover at one side such that a user can select each one of said pages to be on top, said device comprising an electrically powered page detection mechanism arranged to determine which one of said pages is on top, said back cover comprising an electrically powered touch detection mechanism arranged to determine the presence and location of a tip of a user's finger or stylus on or near the surface of the page on top.

Such a device is described in detail in US 6,262,662 B1, which is incorporated herein by reference.

In particular the invention relates to an electronic menu for ordering items in a restaurant or the like. However the input device may also be a device for selecting other items, such as an electronic TV recorder programming guide or an electronic shopping catalogue.

One problem related to these user input devices is that while they need electric power they are preferably as thin and light as possible. Hence there is not much space for large and heavy batteries in the device. The device may be powered by solar panels on the device, but these provide little power. Therefore there is a need for such devices to consume less power.

Another problem related to these user input devices is, that they are not very flexible in use, for instance when the set of selectable items needs to be changed.

The invention aims at a simple, easy to use and reliable user input device of the above described type.

According to one aspect of the invention said user input device comprises a power management device electronically coupled to said detection mechanisms and arranged to keep said page detection mechanism in a sleep modus wherein no or relatively little power is used until said touch detection mechanism determines the presence of the tip of a user's finger or stylus, and to power up said page detection mechanism temporarily for a period of time if said touch detection mechanism determines the presence of the tip of a user's finger or stylus, said period of time being long enough to enable said page detection mechanism to determine which one of said pages is on top, and to put said page detection mechanism in said sleep modus once said determination has been completed.

Said page detection mechanism preferably comprises a multitude of RFID tags, each page comprising an RFID tag, and an RFID reader provided in or on said back cover. Said RFID tags are preferably of the unpowered type. US 6,262,662 B1 describes such a page detection system in detail. A major problem with RFID based page detection system is the very high power consumption of RFID readers that can be several times more than all other electronic components combined.

According to another aspect of the invention each page comprises more than one alternative location for an RFID tag, and more than one RFID reader is provided, aligned with the said RFID tag locations, preferably in or on said back cover, in order to be able to detect more than the maximum number of pages based on the maximum number of RFID tags that can be detected simultaneously by one RFID reader. This feature can be considered to be a separate invention.

Said touch detection mechanism preferably comprises a capacitive sensor pad provided in or on said back cover underneath said stack of pages.

Said electric power may for instance be provided by a battery, a capacitor or a solar panel.

Said pages are preferably flexible paper, cardboard or plastic pages, like the ones found in typical restaurant table menus. According to another aspect of the invention said RFID tags are provided as stickers on said pages. According to a further aspect of the invention said pages each comprise a flexible folder comprising said RFID tag, and a replaceable flexible sheet having said selectable items printed thereon. In that manner the selectable items of said user input device can be easily changed at low costs, because the RFID tags do not need to be replaced. By reprogramming the processing means in the device or system where appropriate, the new selectable items can be communicated.

In a preferred embodiment of the invention said user input device comprises a processing means, said page detection mechanism and said touch detection mechanism being connected to said processing means, said processing means being arranged to determine from data provided by said page detection mechanism and said touch detection mechanism which selectable printed item in said stack of pages is selected by a user. Said user input device preferably comprises data communication means arranged to communicate data concerning the item selected by a user to an external order receiving device comprising a processing means which is connected to said user input device, said processing means arranged to receive said data from said user input device and to communicate data concerning which item is selected by a user on said user input device, for instance to staff of a restaurant or the like.

In another preferred embodiment of the invention said user input device comprises data communication means arranged to communicate data provided by said page detection mechanism and said touch detection mechanism to an external order receiving device.

Said data communication means preferably are wireless communication means, such as WiFi.

Said user input device preferably comprises a display arranged to receive data about a determined selected printed item in order to be displayed thereon.

In a further preferred embodiment said device comprises a light detector arranged to be occluded by the front cover in closed position, and wherein the device is arranged to detect if the cover is open or closed by detecting the status of the light detector.

In a further preferred embodiment said light detector is arranged to use, as a reference, a second, ambient light detector fitted in a location that does not get occluded by the front cover in closed position. According to a further aspect, the invention relates to an ordering system comprising at least one user input device as described before, and an order receiving device comprising a processing means which is connected to said user input device, said processing means arranged to receive data from said user input device and to communicate data concerning which item is selected by a user on said user input device. In this embodiment said processing means in said order receiving device may be arranged to determine from data provided by said page detection mechanism and said touch detection mechanism which selectable printed item in said stack of pages is selected by a user. The determined selected printed item may be communicated back to the user input device in order to be displayed thereon.

The invention will now be exemplified by means of a preferred embodiment, with reference to the figures, wherein:

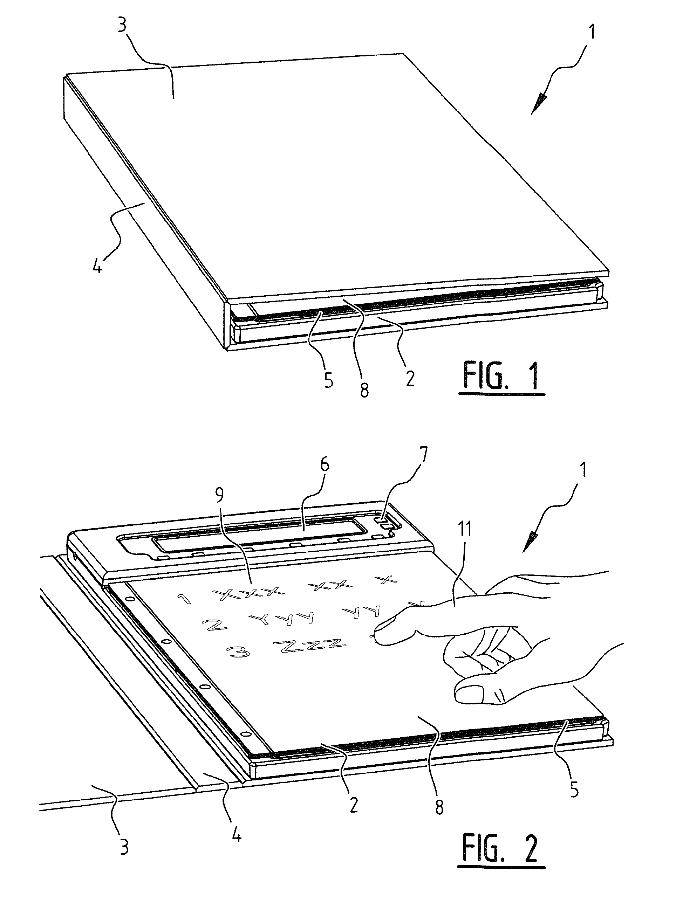

Figure 1 is a perspective view of an electronic menu in closed position;
Figure 2 is a perspective view of the electronic menu of figure 1 in open position;

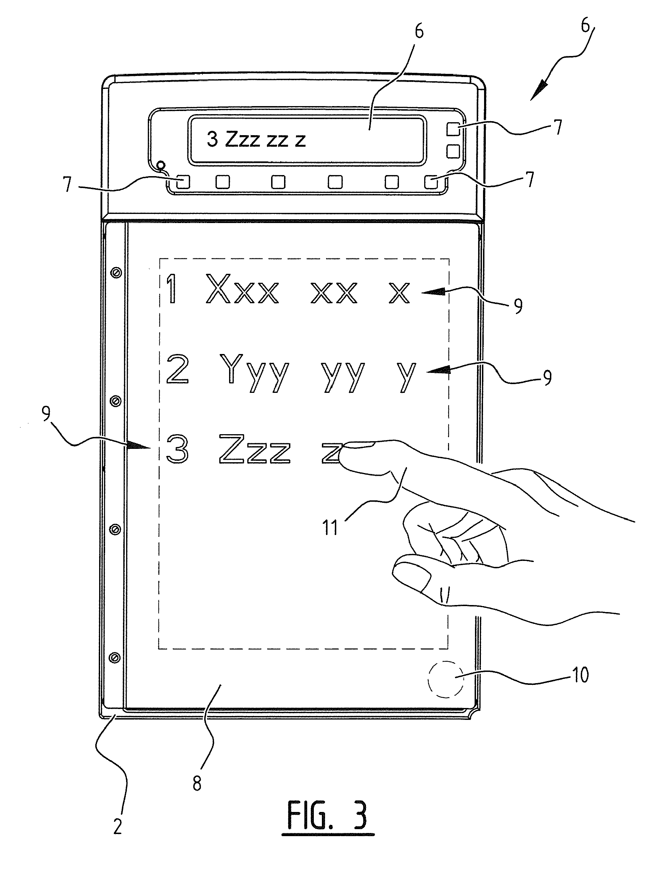

Figure 3 is a top view of the electronic menu as shown figure 2; and

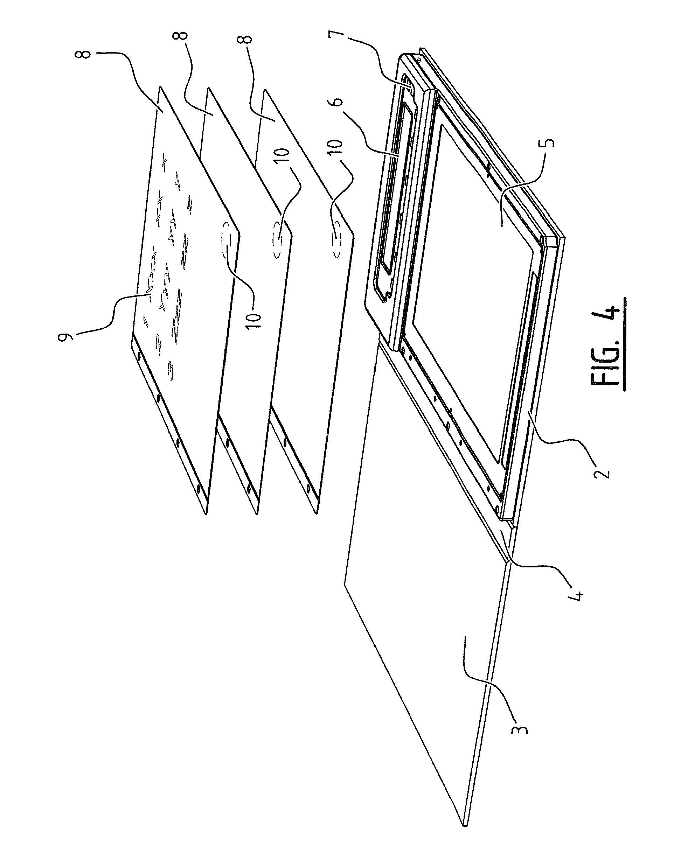

Figure 4 is an perspective exploded view of the electronic menu as shown in figure 2.

According to the figures, an electronic menu 1 having a book structure, comprising a panel shaped back cover 2, a panel shaped front cover 3, and a strip shaped spine 4 hingeably connected to the back cover 2 at one side and to the front cover 3 at the other side. The inner surface of the back cover 2 is partly provided with a capacitive sensor pad 5 which can sense the presence above and near its surface and the xy-location of, for instance, the tip of a fingertip or stylus. The remaining surface at the top of the back cover 2 is provided with an electronic display 6 and several control buttons 7.

On top of the sensor pad 5 is provided a stack of paper pages 8, which are releasably and hingeably fixed to the sensor pad 5 on its left side, such that the paper pages 8 can be flipped over like an ordinary book.

On each paper page a number of selectable menu items 9 are printed. The menu items may be organised in a simple list as shown in the figures, but they may also be randomly placed on locations on the page. Further, each page is provided with a unique passive RFID tag 10, for instance in the form of an RFID sticker.

Underneath the RFID tags 10, the back cover 2 is provided with an electronic RFID reader adjacent the sensor pad 5 (not shown). The back cover is provided with a light detector (not shown) that is occluded by the front cover when the menu front cover is closed, as a means of detecting that the menu is open or closed. The back cover 2 is further provided with processing means electronically connected to said RFID reader, to said light detector, to said sensor pad, to said electronic display, to said control buttons, and to an electronic memory, a battery and to wireless WiFi communication means in said back cover 2. Said processing means includes an electronic power management system, which is arranged to control the powered state of the RFID reader.

In use, when the electronic menu is powered on by a user by opening the front cover, the user may flip any number of pages 8 and inspect the menu items 9. While doing this the sensor pad 5 is powered and actively sensing for capacitive changes, but the power management system keeps the RFID reader powered off. Once the user brings the tip of a finger 11 near a menu item 9 on the top page 8, the sensor pad 5 will sense the presence and location coordinates thereof, and the processing means will instruct the power management system to power on the RFID reader. The RFID reader detects a number of RFID tag numbers, and for instance the lowest detected ID number within the set of detected ID numbers determines which page 8 is on top of the stack. As soon as the set of ID number is detected, the processing means instruct the power management system to power off the RFID reader.

The detected page number and location coordinates are compared by the processing means and matched with a database present in said memory means to determine the corresponding menu item 9 which the user selected. The selected menu item is displayed on the display, and the user can then push one of the control buttons 7 to send the selected item wirelessly to an external order receiving device, which may for instance be a personal computer or tablet computer (not shown) which is used by the kitchen staff of a restaurant or the like to receive and process client's orders.

The invention has thus been described by means of a preferred embodiment. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein.

## Claims

1. A user input device, such as an electronic menu, comprising a back cover, a stack of pages, each page having selectable printed items thereon, each page being removable from said stack, for instance by being hingedly attached to said back cover at one side, such that a user can select each one of said pages to be on top, said device comprising an electrically powered page detection mechanism arranged to determine which one of said pages is on top, said back cover comprising an electrically powered touch detection mechanism arranged to determine the presence and location of a tip of a user's finger or stylus on or near the surface of the page on top, **characterized in that** said user input device comprises a power management device electronically coupled to said detection mechanisms and arranged to keep said page detection mechanism in a sleep modus wherein no or relatively little power is used until said touch detection mechanism determines the presence of the tip of a user's finger or stylus, and to power up said page detection mechanism temporarily for a period of time if said touch detection mechanism determines the presence of the tip of a user's finger or stylus, said period of time being long enough to enable said page detection mechanism to determine which one of said pages is on top, and to put said page detection mechanism in said sleep modus once said determination has been completed.

2. The user input device in accordance with claim 1, wherein said page detection mechanism comprises a multitude of RFID tags, each page comprising an RFID tag, and an RFID reader provided in or on said back cover.

3. The user input device in accordance with claim 2, wherein each page comprises more than one alternative location for an RFID tag, and more than one RFID reader is provided, aligned with the said RFID tag locations, preferably in or on said back cover.

4. The user input device in accordance with claim 2 or 3, wherein said RFID tags are of the unpowered type.

5. The user input device in accordance with any of the previous claims, wherein said touch detection mechanism comprises a capacitive sensor pad provided in or on said back cover underneath said stack of pages.

6. The user input device in accordance with any of the previous claims, wherein said pages are flexible paper, cardboard or plastic pages.

7. The user input device in accordance with any of the previous claims, wherein said pages each comprise a flexible folder comprising said RFID tag, and a replaceable flexible sheet having said selectable items printed thereon.

8. The user input device in accordance with any of the previous claims, wherein said device comprises a light detector arranged to be occluded by the front cover in closed position, and wherein the device is arranged to detect if the cover is open or closed by detecting the status of the light detector.

9. The user input device in accordance with any of the previous claims, wherein said light detector is using, as a reference, a second, ambient light detector fitted in a location that does not get occluded by the front cover in closed position.

10. The user input device in accordance with any of the previous claims, wherein said user input device comprises a processing means, said page detection mechanism and said touch detection mechanism being connected to said processing means, said processing means being arranged to determine from data provided by said page detection mechanism and said touch detection mechanism which selectable printed item in said stack of pages is selected by a user.

11. The user input device in accordance with any of the previous claims, wherein said user input device comprises data communication means, preferably wireless communication means such as WiFi, arranged to communicate data concerning the item selected by a user to an external order receiving device.

12. The user input device in accordance with any of the previous claims, wherein said user input device comprises data communication means, preferably wireless communication means such as WiFi, arranged to communicate data provided by said page detection mechanism and said touch detection mechanism to an external order receiving device.

13. The user input device in accordance with any of the previous claims, wherein said user input device comprises a display arranged to receive data about a determined selected printed item in order to be displayed thereon.

14. Ordering system comprising at least one user input device in accordance with any one of the previous claims, and an order receiving device comprising a processing means which is connected to said user input device, said processing means arranged to receive data from said user input device and to communicate data concerning which item is selected by a user on said user input device.

15. Ordering system in accordance with claim 14, wherein said processing means in said order receiving device are arranged to determine from data provided by said page detection mechanism and said touch detection mechanism which selectable printed item in said stack of pages is selected by a user.
